# EUROPÄISCHE PATENTSCHRIFT

(11) **EP 1 353 753 B1**
(45) Veröffentlichungstag und Bekanntmachung des Hinweises auf die Patenterteilung: **09.11.2005**
(21) Anmeldenummer: 02734837.4
(22) Anmeldetag: 10.01.2002
(51) Int. Cl.: B01L 9/06, B01L 3/00

(54) **HALTEVORRICHTUNG**
HOLDING DEVICE
DISPOSITIF DE RETENUE

(30) Priorität: 26.01.2001 CH 144012001; 25.05.2001 CH 969012001
(43) Veröffentlichungstag der Anmeldung: 22.10.2003
(73) Patentinhaber: Tecan Trading AG, 8708 Männedorf (CH)
(72) Erfinder: GFRÖRER, Andreas, 82549 Königsdorf (DE); GRASSL, Josef, 83471 Berchtesgaden (DE); STREIT, Wolfgang, A-5400 Hallein (AT)
(74) Vertreter: Heusch, Christian
(86) Internationale Anmeldenummer: PCT/CH2002/000012
(87) Internationale Veröffentlichungsnummer: WO 2002/058850

(56) Entgegenhaltungen:
- WO-A-94/23326
- WO-A-99/61152
- US-A- 3 773 183
- US-A- 5 592 289

## Beschreibung

Die vorliegende Erfindung betrifft eine Haltevorrichtung für zumindest einen Träger - insbesondere für einen im Wesentlichen plattenförmigen Objektträger, der Materialien wie Glas, Kunststoff, Silizium, pyrolytischen Graphit und/oder Metall umfasst - wobei der Träger zur Aufnahme von einer oder mehreren organischen und/oder anorganischen Proben geeignet ist.

Solche Haltevorrichtungen sind z.B. aus WO 99/61152 bekannt.

In der Laboranalytik ist die Verwendung von Trägern für Objekte oder Proben, d.h. von Objektträgern seit langem bekannt. Je nach der Art der Proben, die untersucht, bearbeitet und/oder gelagert werden sollen, eignen sich oft im Wesentlichen flache, plattenförmige Objektträger z.B. für immobilisierte Zellen oder Gewebeschnitte. Umfassen die Proben eine Flüssigkeit, sind die Proben z.B. in einer Flüssigkeit gelöst oder suspendiert, so haben sich eher trogförmige Objektträger bewährt.

Auch die Art der Behandlung oder Untersuchung der Proben hat einen Einfluss auf die Gestalt und auf das Material der Objektträger. So werden traditionellerweise Glasobjektträger für die Lichtmikroskopie bzw. Objektträger aus einkristallinem Silizium für die Rasterelektronenmikroskopie oder aus pyrolytischem Graphit für die Rastertunnelmikroskopie verwendet. Auch die Verwendung von Trägern aus Kunststoff (z.B. aus Polycarbonat, Polystyrol oder Polyolefinen) ist bekannt. Aus den Biowissenschaften ist die Verwendung von Plättchen, die eine ebene oder auch eine strukturierte Oberfläche aufweisen, auf welcher biologische bzw. organische Moleküle immobilisiert sind, als sogenannte "Biochips" bekannt. Metallplatten als Objektträger werden oft für die "MALDI TOF-MS", die "Matrix Assisted Laser Desorption Ionisation - Time of Flight Mass Spectrometry" verwendet.

Viele Laborprozesse arbeiten mit Proben, die auf einem Objektträger immobilisiert, d.h. von diesem gehalten sind. Solche Laborprozesse sind unter anderen in den Bereichen Genomics oder Proteomics bekannt, welche die Bearbeitung und Untersuchung von Erbsubstanzen, wie DNA (Desoxyribonukleinsäure), RNA (Ribonukleinsäure) bzw. deren Teile in Form von Oligonukleotiden oder von Proteinen (Eiweissen, z.B. in Form von Antigenen oder Antikörpern bzw. deren Teile in Form von Polypeptiden) umfassen. Solche und ähnliche Prozesse können eine Vielzahl von Arbeitsschritten in verschiedenen Arbeitsstationen umfassen: Z.B. wird für die Hybridisierung von DNA zuerst ein Proben-Array, d.h. eine flächige, regelmässige Anordnung von Proben, auf einem Glasobjektträger für die Lichtmikroskopie mittels "Spotting" oder "Arraying" hergestellt. Die Proben werden dann typischerweise einem oder mehreren "Linker- bzw. Blocking-Schritten" unterworfen. Danach erfolgt der eigentliche Hybridisierungsschritt, der üblicherweise mit einem Waschvorgang abgeschlossen wird. Anschliessend kann die Probe mit einem Fluoreszenzmikroskop oder anderen speziellen Nachweisgeräten untersucht werden.

Es hat sich als sehr zeitraubend und umständlich erwiesen, die Probenträger bzw. Objektträger jedes Mal für einen Arbeitsschritt von Hand in einer entsprechenden Bearbeitungsstation zu befestigen und nach erfolgtem Arbeitsschritt aus dieser Bearbeitungsstation wieder von Hand herauszunehmen. Zudem stellen solche Manipulationen mit den Objektträgern eine Quelle für die Beschädigung und/oder Verwechslung von Objektträgern oder gar von den Proben selbst dar. Zudem kann durch wiederholtes Manipulieren eine Kontaminationsgefahr für andere Proben oder auch eine Infektionsgefahr für den Laboranten bestehen.

Die Aufgabe der vorliegenden Erfindung besteht darin, eine Vorrichtung vorzuschlagen, welche das Einsetzen und Übertragen von Objektträgern vereinfacht und das Risiko einer Beschädigung oder Verwechslung der Proben bzw. einer Kontamination oder einer Infektion minimiert.

Erfindungsgemäss wird diese Aufgabe gemäss den Merkmalen des unabhängigen Anspruchs 1 gelöst. Vörteilhafte und zusätzliche Merkmale ergeben sich aus den abhängigen Ansprüchen.

Eine solche Haltevorrichtung hat den Vorteil, dass auch mehrere Proben gleichzeitig gehalten und transportiert bzw, gelagert werden können. Durch die speziellen Angriffsflächen für die Greifer eines Roboters können solche Haltevorrichtungen automatisch, d.h. von einem Prozessor gesteuerten Roboter, in einer Bearbeitungs-, Untersuchungs- oder Lagerstation positioniert oder von dort weggenommen werden. Sind die Objektträger einmal an der Haltevorrichtung befestigt, so wird bevorzugt immer die Haltevorrichtung mit den Objektträgern bewegt. Dadurch entfällt das wiederhalte manuelle Manipulieren an den Objektträgern und damit entfallen auch die vorbeschriebenen risikobehafteten Operationen mit den Objektträgern.

Neben der Vielzahl an Materialien können die Objektträger auch eine Vielzahl von Grössen, Formen und Oberflächenstrukturierungen aufweisen. So eignen sich insbesondere Mikroplatten mit Vertiefungen, den sogenannten "Töpfchen" oder "Wells", als trogförmige Objektträger für flüssige Proben oder eine Flüssigkeit umfassende Proben. Für das automatisierte Handling solcher Mikroplatten, die auch als Mikrotiterplatten™ (Handelsmarke von Beckman Coulter, Inc. 4300 N. Harbour Blvd., P.O. Box 3100, Fullerton, CA 92834, USA) bekannt sind, existieren bereits die unterschiedlichsten Geräte.

Eine bevorzugte Ausführungsform der erfindungsgemässen Haltevorrichtung ist deshalb dadurch gekennzeichnet, dass sie als Adapter ausgebildet ist, dessen Aussenflächenprofil, Höhenmass und Stapelbarkeit - zum Absetzen in einer Mikroplattenstation eines Probenanalyse-, Probenbearbeitungs- und/oder Probenaufbewahrungs-Systems - im Wesentlichen mit dem Aussenflächenprofil, dem Höhenmass und der Stapelbarkeit einer Mikroplatte übereinstimmen. Eine solche Haltevorrichtung ist vorzugsweise rahmenförmig gebaut und umfasst je zwei im Wesentlichen parallel zu einander verlaufende Längswände und Querwände. Zudem kann sie Zwischenwände umfassen, die im Wesentlichen parallel zu den Längswänden und/oder Querwänden verlaufen. Eine andere bevorzugte Ausführungsform der erfindungsgemässen Haltevorrichtung ist plattenförmig gebaut.

Weisen solche mit Objektträgern bestückte Haltevorrichtungen die Form einer standardisierten Mikroplatte auf, so können sie als Adapter zwischen Objektträgern mit praktisch beliebiger Form, Grösse und Material und den Mikroplattenhandling-Robotern, bzw. Mikroplattenstationen eines Probenanalyse-, Probenbearbeitungs- und/oder Probenaufbewahrungs-Systems verwendet werden.

Als Mikroplatte wird im Folgenden die bereits zitierte Mikrotiterplatte™ oder auch der SBS-Standard (Society for Biomolecular Screening, 36 Tamarack Ave. Suite 348, Danbury, CT 06811, USA) : "Proposed SBS Standard 96 Well Microplate SBS 1a", Drawing No. 102005, Sheets 1-5 (Internet-Adresse: sbsonline.com/disgrps/platestd/details.htm) bezeichnet. Als Mikroplatten werden hier ebenfalls Mikroplatten mit höherer Well-Anzahl (z.B. 384, 1536, etc. Wells pro Mikroplatte) bezeichnet, welche z.B. mit unterschiedlichen Bauhöhen, unterschiedlichem Fassungsvermögen der Wells, unterschiedlichem Neigungswinkel der Seitenwände bzw. des Aussenprofils vorgeschlagen werden bzw. deren Standard in Vorbereitung ist. Wesentlich ist in jedem Fall, dass die erfindungsgemässe Haltevorrichtung an die Form und die Aussenabmessungen einer gebräuchlichen Mikroplatte angepasst ist.

Haltevorrichtungen mit der Form von solchen Mikroplatten erleichtern das Handling der darauf gesicherten Objektträger, welche nun zwischen den in Geräten zum automatisierten Handling von Mikroplatten vorzunehmenden Prozessschritten nicht mehr direkt angefasst werden müssen. Ein weiterer Vorteil der Verwendung solcher Haltevorrichtungen bzw. Adapter besteht darin, dass eine wesentlich grössere Fläche der Objektträger zum Beladen von Proben benutzt werden kann, somit ergibt sich eine weitere Steigerung der Kapazität in der Bearbeitung und/oder Untersuchung und/oder Aufbewahrung von Proben.

Bevorzugte und beispielhafte Ausführungsformen der erfindungsgemässen Haltevorrichtung werden im Folgenden an Hand von schematischen Zeichnungen - welche die Erfindung lediglich veranschaulichen, deren Umfang aber nicht einschränken - näher erläutert. Dabei zeigen:
- Fig. 1: eine Draufsicht auf eine Haltevorrichtung, gemäss einer ersten Ausführungsform;
- Fig. 2: eine Draufsicht auf eine Haltevorrichtung, gemäss einer zweiten Ausführungsform;
- Fig.3: einen vertikalen Längsschnitt durch die Haltevorrichtung in Fig. 1, gemäss der ersten Ausführungsform;
- Fig. 4: einen vertikalen Querschnitt durch die Haltevorrichtung in Fig. 1, gemäss der ersten Ausführungsform;
- Fig. 5: einen vertikalen Längsschnitt durch die Haltevorrichtung in Fig. 2, gemäss der zweiten Ausführungsform;
- Fig. 6: eine Draufsicht auf eine Haltevorrichtung, gemäss einer dritten Ausführungsform;
- Fig. 7: eine Draufsicht auf eine Haltevorrichtung, gemäss einer vierten Ausführungsform;
- Fig. 8: eine Draufsicht auf eine Haltevorrichtung, gemäss einer fünften Ausführungsform;
- Fig. 9: eine Draufsicht auf eine Haltevorrichtung, gemäss einer sechsten Ausführungsform;
- Fig. 10: eine erste 3-D Darstellung der Haltevorrichtung, gemäss einer siebten Ausführungsform;
- Fig. 11: eine zweite 3-D Darstellung der Haltevorrichtung, gemäss der siebten Ausführungsform.

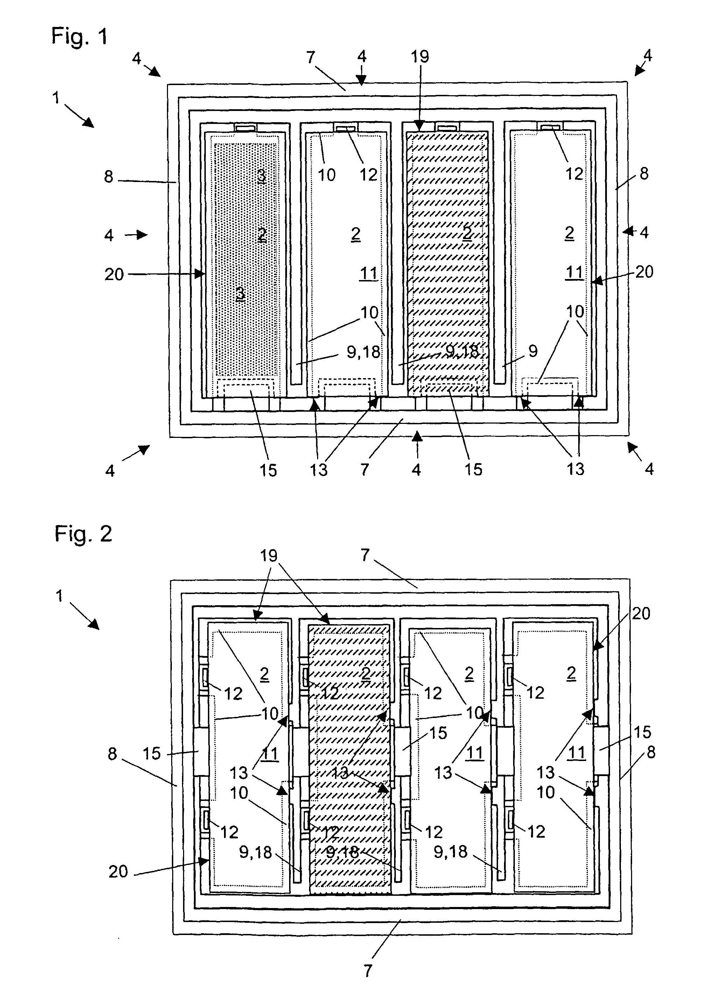

Figur 1 zeigt eine erfindungsgemässe Haltevorrichtung 1 gemäss einer ersten, rahmenförmigen Ausführungsform. Bei den in die Haltevorrichtung eingesetzten vier Trägern 2 handelt es in diesem Fall um Glasobjektträger für die Lichtmikroskopie. Die Haltevorrichtung 1 umfasst - zur Ineingriffnahme durch einen Roboter, insbesondere durch einen Mikroplattenhandling-Roboter - Angriffsflächen 4, die durch Greifer dieses Roboters beaufschlagbar sind.

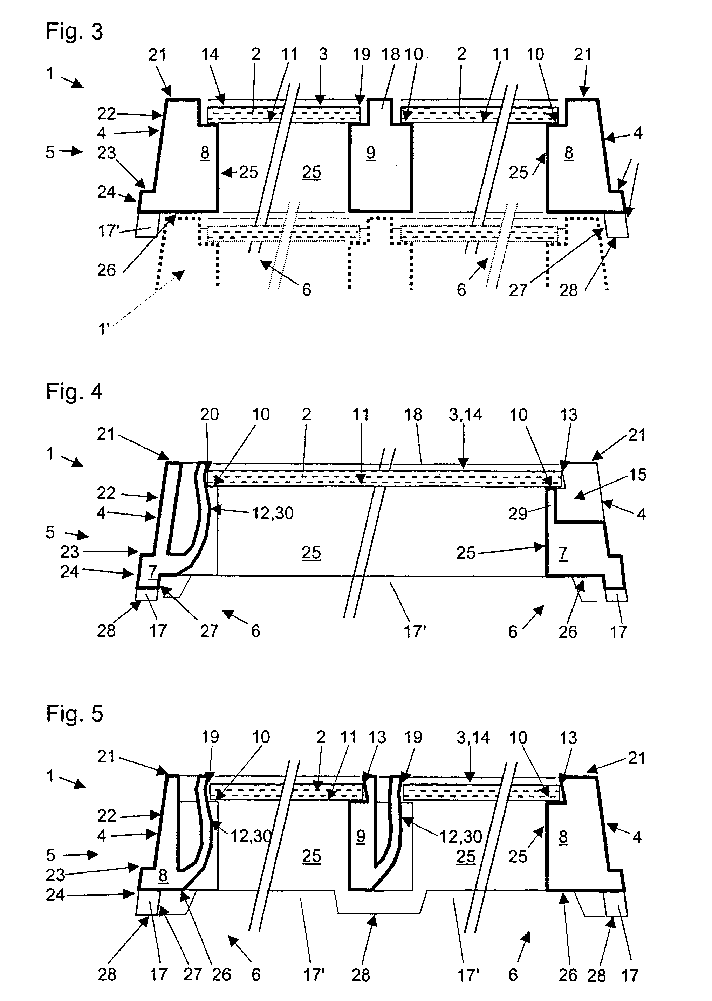

Diese Angriffsflächen 4 befinden sich vorzugsweise je gegenüberliegend an den beiden Längswänden 7 oder an den beiden Querwänden 8. Speziell bevorzugt ist je eine Angriffsfläche 4 im Bereich des Aussenflächenprofils 5 der Längswände 7 bzw. der Querwände 8 der Haltevorrichtung 1 angeordnet. Dieses Aussenflächenprofil 5 (vgl. Fig. 3 bis 5) der Haltevorrichtung 1 stimmt im Wesentlichen mit dem Aussenflächenprofil von Mikroplatten überein, wie diese weiter oben beschrieben worden sind. Mit dieser Anordnung wird erreicht, dass ein üblicherweise mit zwei Greifern ausgerüsteter Mikroplattenhandling-Roboter (nicht gezeigt) diese Haltevorrichtung 1 mit den Greifern im Bereich der Angriffsfläche 4 beaufschlagen und dank dem damit erzeugt Reibschluss einwandfrei aufnehmen und sicher transportieren kann.

Ein Beaufschlagen der Angriffsflächen 4 mit Vakuum kann eine noch schonendere Aufnahme durch einen Handling-Roboter ermöglichen. Ein alternatives Beaufschlagen der Angriffsflächen im Formschluss wird z.B. dadurch ermöglicht, dass ein vierarmiger Roboter über das Zentrum einer Mikroplatte bewegt wird und die Haltevorrichtung im Bereich ihrer vier Ecken ergreift, indem er jeden seiner vier zu diesem Zweck der Eckgeometrie von Mikroplatten angepasste Greifer ansetzt und jeweils gegen das Zentrum der Haltevorrichtung 1 bewegt.

Ein spielfreies Halten der erfindungsgemässen Haltevorrichtungen 1 auf bzw. in Mikroplattenstationen kann - insbesondere für Mikroplatten mit z.B. 1536 Wells oder für feine Arrays sehr wichtig sein, damit die Position der Wells bzw. der Probenpunkte zweifelsfrei wieder angefahren werden kann. Dieses spielfreie Halten kann über Greifwerkzeuge erfolgen, welche die Haltevorrichtung 1 im Bereich der Ecken und/oder Aussen- und/oder Innenflächen beaufschlagen. Die notwendigen Greifwerkzeuge sind dabei vorzugsweise an oder in den Mikroplattenstationen angeordnet. Alternativ zu Greifwerkzeugen kann - zum spielfreien Halten der Haltevorrichtung 1 in Bezug auf die Mikroplattenstation - eine solche Mikroplattenstation/Haltevorrichtung-Kombination mit einem an sich bekannten Druckknopf-Rastmechanismus, mit Haltefedern (vorzugsweise aus Metall) oder Druckstiften ausgerüstet sein.

Eine ebenfalls bevorzugte Alternative ist das Anordnen dieser Angriffsflächen 4 auf der Unterseite der Haltevorrichtung 1, so dass der Roboter die Halteplatte wie ein Gabelstapler aufnehmen kann. Dieses Aufnehmen wird durch eine Einfuhröffnung 17 (vgl. Fig. 3 bis 5) erleichtert. Diese Einfuhröffnung 17 erleichtert auch das Stapeln der erfindungsgemässen Haltevorrichtungen 1, wie weiter unten noch beschrieben wird.

Ein Mikroplattenhandling-Roboter kann nicht nur verwendet werden, um die Haltevorrichtung aufzunehmen und einfach irgendwo auf einem Tisch abzulegen; er kann auch verwendet werden, um eine Haltevorrichtung 1 gezielt in einer Mikroplattenstation eines Probenanalyse- und/oder Probenbearbeitungs- und/oder Probenaufbewahrungs-Systems abzusetzen. Zu diesem Zweck umfasst die erfindungsgemässe Haltevorrichtung 1 ein Stapelflächenprofil 6 (vgl. Fig. 3 bis 5), welches im Wesentlichen mit dem Stapelflächenprofil einer Mikroplatte übereinstimmt.

Durch das weitgehende Übereinstimmen von Aussenflächenprofil 5 und Stapelflächenprofil 6 mit den entsprechenden Dimensionen einer Mikroplatte, wird die erfindungsgemässe Haltevorrichtung 1 zu einem Adapter zwischen praktisch jedem beliebigen Träger von Objekten (seien diese nun eher platten- oder trogförmig) und allen Geräten und Systemen (seien diese nun mit einem Handling-Roboter bzw. einer Computersteuerung ausgerüstet oder nicht) zur Analyse und/oder Bearbeitung und/oder Aufbewahrung von Proben in Mikroplatten.

Die in Fig. 1 gezeigte, rahmenförmige Haltevorrichtung 1 umfasst zwei Längswände 7, zwei Querwände 8 und drei im Wesentlichen parallel zu den Querwänden 8 verlaufende Zwischenwände 9. Alle diese Bauteile weisen einen Absatz 10 auf, auf den ein Träger 2 zumindest teilweise auflegbar ist. Die Grösse eines Trägers 2 (dritter von links) ist durch Schrägschraffur hervorgehoben und der mit Proben 3 belegte Bereich eines Trägers 2 (erster von links) ist gepunktet dargestellt. Die eingesetzten Träger 2 werden hier jeweils ungefähr in der Mitte ihrer Querseite 19 durch ein Federelement 12 beaufschlagt. Dabei übt dieses Federelement 12 eine Federkraft auf diesen Träger 2 aus, welche in im Wesentlichen zur Oberfläche 14 des Trägers paralleler und/oder senkrechter Richtung gerichtet ist und durch welche dieser Träger 2 gegen einen beidseits einer Grifföffnung 15 angeordneten Anschlag 13 gedrückt wird. Diese Federelemente 12 sind in der Lage, alle üblichen Fertigungstoleranzen oder Normungsvariationen bei Glasobjektträgern auszugleichen. Solche Federelemente 12 können - dank dem langen Federweg - auch die unterschiedlichen Standardgrössen der Glasobjektträger ausgleichen. Somit bildet die erfindungsgemässe Haltevorrichtung 1 einen Adapter bzw. ein "Interface" für fast alle beliebigen Glasobjektträger für die Lichtmikroskopie und Systeme zum Handling von Mikroplatten.

Die folgende Tabelle gibt einen Überblick über die gebräuchlichsten Glasobjektträger:

| Typ | Inch: 1 x 3 Zoll | Metrisch: 25 x 75 mm |
|---|---|---|
| Dimensionen: | | |
| Länge x Breite | 76.2 mm x 25.4 mm | 76 mm x 25 mm |
| (Toleranzen) | (± 0.5 mm) | (± 0.5 mm) |

| Dicke: | | |
|---|---|---|
| "standard" | 1.02 mm (± 0.05 mm) | 1.02 mm (± 0.05 mm) |
| "dick" | 1.2 mm (± 0.1 mm) | |

| Behandlung: | | |
|---|---|---|
| Ecken | scharf, gefast | scharf, gerundet |
| Kanten | scharf, gefast | scharf |
| Oberflächen | blank, sandgestrahlt, bemalt auf einer oder beiden Seiten | blank, sandgestrahlt, bemalt auf einer oder beiden Seiten |

(gemäss: Schermer, M.J.: Confocal scanning microscopy in microarray detection; in "DNA Microarrays, A practical approach"; Mark Schena (ed.), Oxford University Press 1999, 17-42)

Nicht nur die Dimensionen, auch die unterschiedlichen Behandlungen der Ecken und Kanten dieser Objektträger werden durch die Ausbildung der Haltevorrichtung 1 ausgeglichen. Einerseits ist dabei der Federweg der Federelemente 12 massgebend. Andrerseits sind die Zwischenwände 9 vorzugsweise so weit von den Querwänden 8 beabstandet, dass die Objektträger mit beachtlichem Spiel in die Vertiefung 11 eingelegt werden können. Die Absätze 10 sind dabei so breit ausgebildet bzw. so weit über die Stege 18 auskragend, dass die Träger 2 keinesfalls durch den Rahmen fallen können.

Zum Einsetzen eines Glasobjektträgers 2 in die Haltevorrichtung wird dieser mit zwei Fingern einer Hand (vorzugsweise mit Daumen und Mittelfinger, oder von einem Roboter) an jeder seiner Querseiten 19 beaufschlagt, so von einem frischen Stapel Objektträger genommen und mit dem Mittelfinger voraus in eine Vertiefung 11 eingelegt, bis der Träger 2 an das Federelement 12 stösst. Nach dem Wegziehen des Mittelfingers wird mit dem Daumen gegen den Druck des Federelements 12 nachgeschoben, bis der Träger 2 mit dem Daumen über den Anschlag 13 bewegt und auf den Absatz 10 abgelegt werden kann. Nach dem Wegziehen des Daumens drückt nun das Federelement 12 diesen Träger 2 - durch die in im Wesentlichen zur Oberfläche 14 des Trägers in paralleler und/oder senkrechter Richtung gerichtete Federkraft - gegen den Anschlag 13. Dieser Anschlag 13 weist vorzugsweise einen Hinterschnitt auf, so dass der Träger 2 durch die Federkraft des Federelements 12 gegen den Absatz 10 gedrückt wird und nicht nach oben ausweichen kann. Derart in eine Haltevorrichtung 1 eingesetzte Träger 2 sind so sicher gehalten und können nicht herausfallen, selbst wenn die mit Trägern 2 beschickten Haltevorrichtungen 1 abrupt in jede beliebige Raumlage bewegt werden.

Das Herausnehmen eines Trägers 2 aus der Haltevorrichtung 1 erfolgt sinngemäss in der umgekehrten Reihenfolge. Damit der Daumen die zum Einsetzen oder Herausnehmen eines Trägers 2 notwendige Bewegungsfreiheit hat, weist die Haltevorrichtung 1 vorzugsweise Grifföffnungen 15 auf, in welche der Daumen etwas eintauchen kann.

Durch das beschriebene Einsetzen der Objektträger 2 wird die Oberfläche 14 derselben nur wenig im Bereiche der Querseiten 19 berührt. Sieht man zudem von den Bereichen nahe der Längsseiten 20 des Trägers 2 ab, die wegen der Dimensionsunterscheide der Träger sicherheitshalber freigelassen werden, so stehen mindestens 66% der Oberfläche 14 des Trägers 2 effektiv zur Aufnahme von Proben 3 zur Verfügung (in Fig. 1 gepunktet dargestellt).

Figur 2 zeigt eine Draufsicht auf eine rahmenförmige Haltevorrichtung 1, gemäss einer zweiten Ausführungsform. Im Gegensatz zu der in Fig. 1 gezeigten, ersten Ausführungsform befinden sich hier jeweils zwei Federelemente 12 an den Querwänden 8 und an den dazu im Wesentlichen parallelen Zwischenwänden 9. Sinngemäss sind die Anschläge 13 jeweils gegenüber, ebenfalls an den Querwänden 8 und an den Zwischenwänden 9 angeordnet. Ebenfalls vorhanden sind Grifföffnungen 15, so dass das Einsetzen und Herausnehmen von Objektträgern in der oben beschriebenen Art erfolgen kann; allerdings mit dem Unterschied, dass der Träger 2 diesmal an seinen beiden Längsseiten 20 angefasst wird. Die beiden bisher gezeigten Ausführungsformen miteinander vergleichend kann festgehalten werden, dass bei der zweiten Ausführungsform die Länge der Objektträger 2 eine noch geringere Rolle spielt. Vorteilhafterweise stimmen sowohl Aussenflächenprofil 5 als auch Stapelflächenprofil 6 mit den entsprechenden Profilen einer Mikroplatte zumindest im Wesentlichen überein.

Figur 3 zeigt einen vertikalen Längsschnitt durch die Haltevorrichtung in Fig. 1, gemäss der ersten Ausführungsform. Tatsächlich ist ein Teilschnitt durch einen Stapel solcher Haltevorrichtungen 1 gezeigt, wobei die unten liegende Haltevorrichtung 1' des gleichen Typs gestrichelt gezeichnet ist. Zwei eingesetzte, auf den Absätzen 10 der Querwände 8 und der Zwischenwände 9 ruhende Träger 2 sind jeweils erkennbar. Die Träger 2 weisen Proben 3 an ihrer Oberfläche 14 auf. Die Vertiefungen 11 sind in ihren Abmessungen durch die gegenseitigen geometrischen Beziehungen dieser Absätze 10, der Stapelschulter 21 (die vorzugsweise gleichzeitig die Oberkante der Haltevorrichtung 1 darstellt) bzw. der Stege 18 definiert.

Das Aussenflächenprofil 5 dieser erfindungsgemässen Haltevorrichtung 1 setzt sich aus einer Stapelschulter 21, einer daran anschliessenden oberen Aussenfläche 22, einer Stufe 23, einer unteren Aussenfläche 24 und einer Stellfläche 28 zusammen. Das Stapelflächenprofil 6 dieser erfindungsgemässen Haltevorrichtung 1 setzt sich aus einer Stapelfläche 26, einer unteren Innenfläche 27 und der Stellfläche 28 zusammen. Vorteilhafterweise stimmen sowohl Aussenflächenprofil 5 als auch Stapelflächenprofil 6 mit den entsprechenden Profilen einer Mikroplatte zumindest im Wesentlichen überein.

Beim Stapeln solcher Haltevorrichtungen 1,1' liegt, wie in Fig. 3 gezeigt, die Stapelfläche 26 der oben liegenden Haltevorrichtung 1 auf der Stapelschulter 21 der unten liegenden Haltevorrichtung 1'. Dabei kommt die untere Innenfläche 27 der oben liegenden Haltevorrichtung 1 vorzugsweise so nahe an die obere Aussenfläche 24 der unten liegenden Haltevorrichtung 1' zu liegen, dass die beiden Haltevorrichtungen 1,1' aufeinander zentriert sind. Teile der unteren Innenfläche 27 einer Haltevorrichtung 1,1' werden vorzugsweise durch eine Einfuhröffnung 17,17' ausgespart, was das seitliche Einfahren einer oder mehrerer Greifer eines Mikroplattenhandling-Roboters (nicht gezeigt) ermöglicht. Dieses seitliche Einfahren der Greifer unter die Haltevorrichtung 1 bzw. das Beaufschlagen der Haltevorrichtung 1 im Bereich ihrer Aussenflächen 22,24 kann quer zu den Längswänden 7 oder zu den Querwänden 8, aber auch diagonal zu der Haltevorrichtung 1 erfolgen. Die Einfuhröffnungen 17,17' weisen vorzugsweise eine unterschiedliche Höhe auf, so dass die Einfuhröffnungen 17 in den unteren Aussenflächen 24 der Längswände 7 weniger hoch sind als die Einfuhröffnungen 17' in den unteren Aussenflächen 24 der Querwände 8, wobei sich die letzteren Einfuhröffnungen 17' vorzugsweise gerade bis zum Niveau der Stapelfläche 26 erstrecken. Die Stellfläche 28 bildet somit in jeder Ecke einen Winkelfuss für die Haltevorrichtung 1.

Figur 4 zeigt einen vertikalen Querschnitt durch die Haltevorrichtung in Fig. 1, gemäss der ersten Ausführungsform. Das Aussenflächenprofil 5 setzt sich aus einer Stapelschulter 21, einer daran anschliessenden oberen Aussenfläche 22, einer Stufe 23, einer unteren Aussenfläche 24 und einer Stellfläche 28 zusammen. Das Stapelflächenprofil 6 setzt sich aus einer Stapelfläche 26, einer unteren Innenfläche 27 und der Stellfläche 28 zusammen. Ein eingesetzter, auf den Absätzen 10 der Längswände 7 ruhender Träger 2 ist erkennbar und weist Proben 3 an seiner Oberfläche 14 auf. Die Vertiefung 11 ist durch die gegenseitigen Beziehungen dieser Absätze 10, der Stapelschulter 21 (die vorzugsweise gleichzeitig die Oberkante der Haltevorrichtung 1 darstellt) bzw. der Stege 18 definiert. Gut zu erkennen sind die Einfuhröffnungen 17,17' mit ihrer unterschiedlichen Höhe und die Stellfläche 28, welche in jeder Ecke einen Winkelfuss für die Haltevorrichtung 1 bildet. Vorteilhafterweise stimmen sowohl Aussenflächenprofil 5 als auch Stapelflächenprofil 6 mit den entsprechenden Profilen einer Mikroplatte zumindest im Wesentlichen überein.

Der Träger 2 ist ein Glasobjektträger, welcher auf einer seiner Querseiten 19 durch ein Federelement 12 beaufschlagt wird. Das Federelement 12 ist vorzugsweise einstückig mit der Haltevorrichtung 1 aus Kunststoff und im Spritzgiessverfahren hergestellt. Seine Form ist so gewählt, dass - trotz des relativ langen Federweges des den Träger 2 beaufschlagenden Teils von bis zu mehreren Millimetern - eine nur geringe Deformation stattfindet und so die Spannungsbelastung des Federelements 12 möglichst gering bleibt. An seinem oberen Ende ist das Federelement 12 vorzugsweise gegen den Träger geneigt, so dass neben einer horizontalen Komponente der Federkraft auch eine vertikale Komponente auftritt. Es ist klar, dass die horizontale Komponente den Träger 2 gegen den Anschlag 13 und die vertikale Komponente (der durch das Federelement 12 ausgeübten Federkraft) den Träger 2 auf den Absatz 10 drückt. Dieser Anschlag 13 weist vorzugsweise einen Hinterschnitt auf, so dass der Träger 2 durch die Federkraft des Federelements 12 gegen den Absatz 10 gedrückt wird und nicht nach oben ausweichen kann. Derart in eine Haltevorrichtung 1 eingesetzte Träger 2 sind so sicher gehalten und können nicht herausfallen, selbst wenn die mit Trägern 2 beschickten Haltevorrichtungen 1 abrupt in jede beliebige Raumlage bewegt und dort gehalten bzw. bearbeitet werden. Ebenfalls gut sichtbar ist in Fig. 4 die Grifföffnung 15, welche vorzugsweise so ausgestaltet ist, dass eine die Grifföffnung 15 begrenzende, hintere Wand 29 hinter der Querseite 19 des eingesetzten Träges 2 liegt. So ist sichergestellt, dass der Träger 2 während des Einsetzens in die Haltevorrichtung 1 bzw. während des Herausnehmens aus der Haltevorrichtung 1 - beispielsweise mit dem Daumen - sicher geführt werden kann.

Alternative Herstellungsverfahren für das Federelement 12 und die Haltevorrichtung 1 umfassen z.B. die Stereolithographie und insbesondere Verfahren zum Herstellen grosser Stückzahlen, wie Vakuumguss- und Mehrphasenspritzverfahren.

Figur 5 zeigt einen vertikalen Längsschnitt durch die rahmenförmige Haltevorrichtung in Fig. 2, gemäss der zweiten Ausführungsform. Im Gegensatz zu der ersten Ausführungsform befinden sich hier jeweils die Federelemente 12 an den Querwänden 8 und an den dazu im Wesentlichen parallelen Zwischenwänden 9. Sinngemäss sind die Anschläge 13 jeweils gegenüber, ebenfalls an den Querwänden 8 und an den Zwischenwänden 9 angeordnet. Die Grifföffnungen 15 sind auf diesem Längsschnitt nicht zu sehen. Die Einfuhröffnungen 17,17' in den unteren Aussenflächen 24 sind hier gleich hoch ausgebildet und reichen gerade bis zur Unterkante der Stapelfläche 26. Im Bereich jeder Querwand 8 sind hier die Einfuhröffnungen 17 unterbrochen, so dass zusätzliche, die Haltevorrichtung 1 abstützende Füsse mit Stellflächen 28 bereitgestellt sind. Eine zusätzliche Erhöhung der Stabilität kann dadurch erreicht werden, dass keine Einfuhröffnungen ausgebildet werden. Die Ausbildung der Federelemente 12 und der Anschläge 13 entsprechen im Wesentlichen denjenigen der ersten Ausführungsform der Haltevorrichtung 1. Vorteilhafterweise stimmen sowohl Aussenflächenprofil 5 als auch Stapelflächenprofil 6 mit den entsprechenden Profilen einer Mikroplatte zumindest im Wesentlichen überein.

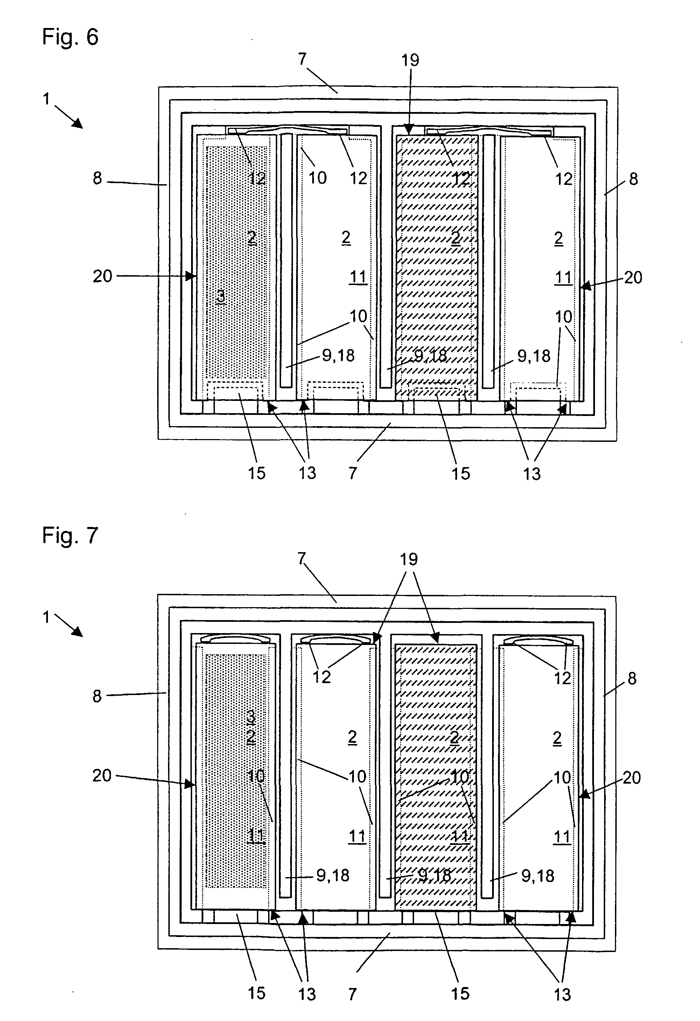

Figur 6 zeigt eine Draufsicht auf eine rahmenförmige Haltevorrichtung 1, gemäss einer dritten Ausführungsform. Im Unterschied zur ersten Ausführungsform, bei welcher die Federelemente 12 stehend angeordnet sind, sind hier die Federelemente 12 liegend angeordnet. Sie greifen aber auf ähnliche Weise im mittleren Bereich der Querseiten 19 der Träger 2 an und erzeugen ebenfalls eine horizontale Federkraft-Komponente, welche den Träger 2 gegen die Anschläge 13 und ein vertikale Komponente, welche den Träger 2 auf den Absatz 10 drückt. Auch diese Anschläge 13 weisen vorzugsweise einen Hinterschnitt auf, so dass der Träger 2 durch die Federkraft des Federelements 12 gegen den Absatz 10 gedrückt wird und nicht nach oben ausweichen kann. Vorteilhafterweise stimmen sowohl Aussenflächenprofil 5 als auch Stapelflächenprofil 6 mit den entsprechenden Profilen einer Mikroplatte zumindest im Wesentlichen überein.

Figur 7 zeigt eine Draufsicht auf eine rahmenförmige Haltevorrichtung 1, gemäss einer vierten Ausführungsform. Im Unterschied zur dritten Ausführungsform, bei der jeweils ein Schenkel 30 des zweischenkligen Federelements 12 je einen Träger beaufschlagt, wird in dieser vierten Ausführungsform jeder Träger 2 mit beiden Schenkeln eines zweischenkligen Federelements 12 beaufschlagt. Die Federelemente 12 greifen zwar auf ähnliche Weise an den Querseiten 19 der Träger 2 an, beaufschlagen diese aber ausserhalb ihres mittleren Bereichs. Auch hier erzeugen die Federelemente 12 ebenfalls eine horizontale Federkraft-Komponente, welche den Träger 2 gegen die Anschläge 13 und ein vertikale Komponente, welche den Träger 2 auf den Absatz 10 drückt. Auch diese Anschläge 13 weisen vorzugsweise einen Hinterschnitt auf, so dass der Träger 2 durch die Federkraft des Federelements 12 gegen den Absatz 10 gedrückt wird und nicht nach oben ausweichen kann. In dieser vierten Ausführungsform wurde auf die Ausbildung von hinteren Wänden 29 verzichtet und die Absätze sind nur entlang der Querwände 8 und Zwischenwände 9 ausgebildet. Die Grifföffnungen 15 sind hier als einfache Durchbrüche der oberen Aussenfläche der Längswände 7 ausgebildet. Vorteilhafterweise stimmen sowohl Aussenflächenprofil 5 als auch Stapelflächenprofil 6 mit den entsprechenden Profilen einer Mikroplatte zumindest im Wesentlichen überein.

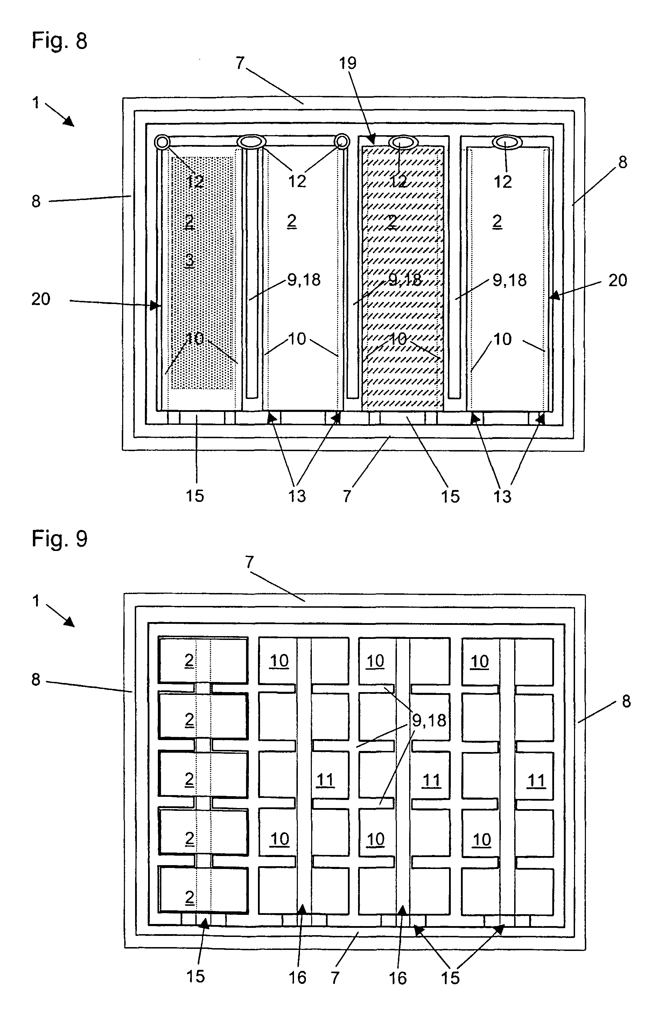

Figur 8 zeigt eine Draufsicht auf eine rahmenförmig Haltevorrichtung 1, gemäss einer fünften Ausführungsform. Im Vergleich mit der vierten Ausführungsform, bei der die Federelemente 12 vorzugsweise einstückig mit der Haltevorrichtung 1 aus Kunststoff und im Spritzgiessverfahren hergestellt sind, werden hier Federelemente 12 in Form von hochflexibeln Rohrstücken, z.B. aus Silikongummi, vorzugsweise in entsprechende Vertiefungen an den oberen Innenflächen 25 der Haltevorrichtung 1 eingeklebt, eingeschweisst oder eingepresst. Wie Fig. 8 zeigt, können diese als Federelemente 12 dienenden Rohrstücke in den Eckbereichen (für die linken zwei Träger gezeichnet) oder in den Mittenbereichen (für die rechten zwei Träger gezeichnet) der Träger 2 angeordnet werden und entsprechend unterschiedliche Durchmesser aufweisen. Die Anschläge 13 und die Grifföffnungen 15 sind wie bei der vierten Ausführungsform der Haltevorrichtung 1 ausgebildet. Vorteilhafterweise stimmen sowohl Aussenflächenprofil 5 als auch Stapelflächenprofil 6 mit den entsprechenden Profilen einer Mikroplatte zumindest im Wesentlichen überein.

Alternativ zu den gezeigten Figuren 1 bis 8 zeigt Figur 9 eine plattenförmige Haltevorrichtung 1. Bei dieser sechsten Ausführungsform sind die Vertiefungen 11 massgenau an die einzusetzenden Träger angepasst, so dass jeder dieser Träger 2 im Wesentlichen spielfrei durch diese Vertiefung 11 aufnehmbar ist. Die Ausführungsform eignet sich für Träger 2 in Form von Siliziumplättchen, Metallplättchen oder anderen sehr präzise herstellbaren Objektträgern, welche nach dem Einlegen in die Haltevorrichtung 1 höchstens etwas gekippt, aber nicht umgedreht werden müssen. Das im Wesentlichen spielfreie Halten genügt somit, ein Verrutschen der Objektträger zu verhindern, so dass auch bei feinsten Arrays die Positionen der einzelnen Proben 3 eineindeutig bestimmt und eingehalten werden können.

Zum Erleichtern des praktisch nur in senkrechter Richtung zur Stapelschulter 21 der Haltevorrichtung 1 möglichen Einlegens und Herausnehmens der Träger 2 weist die Haltevorrichtung 1 Grifföffnungen 15 und Griffnuten 16 auf. Beispielsweise mittels einer Pinzette können nun die einzelnen Träger 2 einfach eingesetzt oder herausgenommen werden. Dabei kann mit einer Pinzettenspitze der Träger dank der vorzugsweise durchlaufenden Griffnute 16 untergriffen werden. Es ist klar, dass die Vertiefungen in ihrer Form und Grösse den zu verwendenden Objektträgern angepasst werden müssen. Die Träger können - abweichend von der gezeigten Rechteckform - auch andere Vieleckformen, wie Dreiecke, Quadrate, Fünfecke, Sechsecke oder selbst gekrümmte Formen wie Kreisscheiben aufweisen. Die Oberfläche solcher Träger 2 kann dabei eben sein oder Strukturen wie z.B. Erhebungen oder Vertiefungen zur Aufnahme von Proben aufweisen. Falls die Objektträger 2 schwer genug sind, kann ihnen in Bezug auf die Vertiefung 11 ein gewisses Spiel in horizontaler Richtung eingeräumt werden. Selbst dann kann mit einigermassen geschicktem Handling verhindert werden, dass die Träger 2 aus den Vertiefungen 11 heraus fallen.

Eine solche plattenförmige Haltevorrichtung 1 kann aus Metall hergestellt sein, bzw. Teile aus Metall oder aus elektrisch leitenden Kunststoffen umfassen. Dies ist insbesondere dann von Vorteil, wenn die Objektträger 2 und/oder die Proben 3 elektrisch kontaktiert werden müssen, sei es, um die Proben einem bestimmten elektrischen Potential auszusetzen oder auch um die Proben zu erden. Wahlweise wird man - je nach Anwendung - die ganze plattenförmige Haltevorrichtung 1 aus Metallen wie Aluminium, rostfreiem Stahl usw. herstellen. Es kann aber auch genügen, nur die eigentliche Aufnahme für die Träger 2 mit den Vertiefungen 11 als relativ dünne Metallplatte auszubilden. Vorteilhafterweise stimmen sowohl Aussenflächenprofil 5 als auch Stapelflächenprofil 6 mit den entsprechenden Profilen einer Mikroplatte zumindest im Wesentlichen überein.

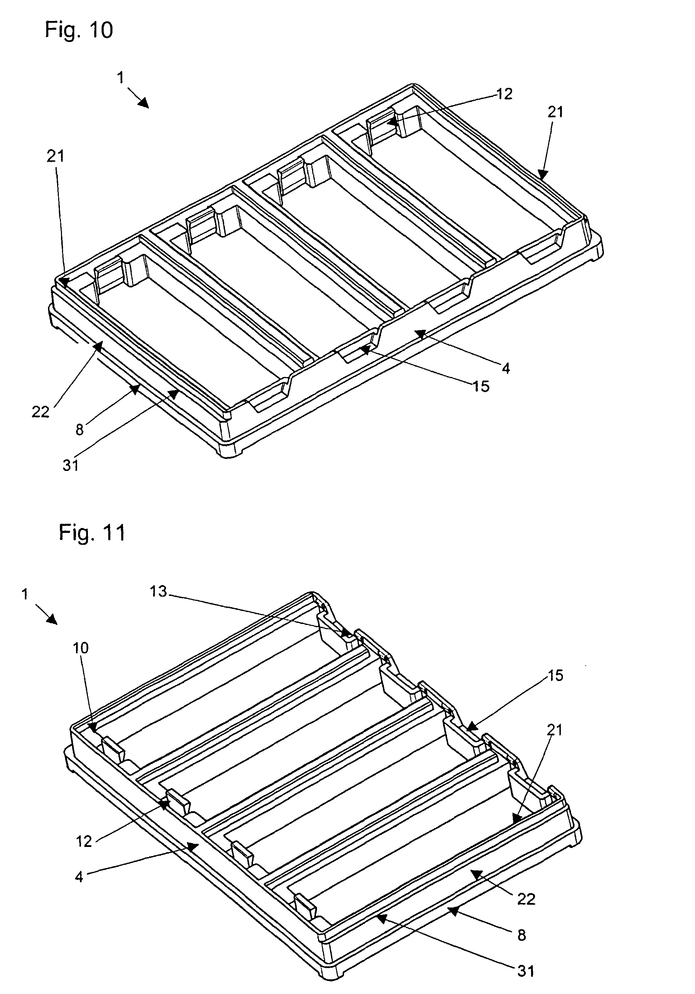

Die Figuren 10 und 11 zeigen eine erste bzw. zweite 3-D Darstellung der Haltevorrichtung 1, gemäss einer siebten Ausführungsform. Diese siebte Ausführungsform entspricht im Wesentlichen der ersten Ausführungsform und ist dadurch gekennzeichnet, dass sich in den oberen Aussenflächen 22 der Querwände 8 eine zweite Stufe 31 in der Nähe und parallel zu der Stapelschulter 21 erstreckt. Diese zweiten Stufe 31 erleichtert das Stapeln von Haltevorrichtungen zusätzlich. In den Figuren sind entsprechende Merkmale mit den gleichen Bezugszeichen versehen. Auch wenn in der Beschreibung nicht jedes Mal ausdrücklich darauf hingewiesen wird, so gelten die Bemerkungen auch für diese Merkmale. Weitere Kombinationen der gezeigten und/oder beschriebenen Merkmale zählen zum Umfang der vorliegenden Erfindung.

Beispiele von Probenanalysegeräten sind: Lichtmikroskope, Fluoreszenzmikroskope, MALDI TOF-MS-Systeme, Array/Biochip-Scanner/Imager und Zellzähler. Beispiele von Probenbearbeitungsgeräten sind: Hybridisierungs-Stationen, Inkubatoren, Waschstationen, Färbestationen, MALDI TOF-MS-Systeme, Arrayer bzw. Spotter zum Aufbringen von diskreten Probenverteilungen oder Geräte zum Pipettieren eines Analyten und In-situ-Hybridisierungs-Geräte. Beispiele von Probenaufbewahrungsgeräten sind: Hotels zum gegebenenfalls gekühlten bzw. klimatisierten Aufbewahren von Proben übereinander und/oder nebeneinander (vorzugsweise beabstandet), Stacker zum Zwischenlagern von Proben bzw. zum Aufbewahren und Bereitstellen von leeren Haltevorrichtungen (vorzugsweise direkt aufeinander gestapelt).

Insbesondere für die Verwendung in Hotels oder in temperierten Mikroplattenstationen ist die Herstellung der erfindungsgemässen Haltevorrichtungen aus einem wärmeleitenden und/oder thermostabilen Kunststoff bzw. aus einem Metall wie z.B. Aluminium vorteilhaft. Das Material für ist vorzugsweise geeignet zum Spritzgiessen, temperaturbeständig bis zu Temperaturen von über 90 °C (vorzugsweise sterilisierbar) und beständig gegen verschiedenste anorganische Reagenzien. Für die einfache und automatische Identifikation jeder Haltevorrichtung - wie dies beispielsweise in Hotels oder auch in Prozessvollautomaten bevorzugt wird - weist jede Haltevorrichtung vorzugsweise einen Barcode auf. Dieser Barcode kann beispielsweise auf die Haltevorrichtung aufgespritzt, aufgedruckt, aufgeklebt oder in dieser ausgespart bzw. eingraviert sein.

Abweichend zu den gezeigten Ausführungsformen können die Federelemente 12 in die Haltevorrichtung 1 eingesetzte bzw. daran befestigte Metallfedern sein. Vorzugsweise sind die Haltevorrichtungen jedoch einstückig aus einem einzigen Material hergestellt. Alternativ kann vorgesehen sein, die Objektträger bzw. Träger 2 auf eine Haltevorrichtung 1 bzw. in deren Vertiefungen 11 zu kleben, zu pressen oder sonstwie zu fixieren. Auch ein Einlegen der Objektträger 2 in eine Spritzgussform und ein An- bzw. Umspritzen dieser Träger 2 mit dem Kunststoff der Haltevorrichtung zum Zweck der Verbindung von Trägern 2 und Haltevorrichtung 1 kann vorgesehen sein. Zum spielfreien Halten der Objektträger 2 auf bzw. in der erfindungsgemässen Haltevorrichtung 1 kann auch ein an sich bekannter Druckknopf-Rastmechanismus, mit Haltefedern (vorzugsweise aus Metall) oder Druckstiften ausgerüstet, verwendet werden.

## Patentansprüche

1. Haltevorrichtung (1), die
• zur Aufnahme von Objektträgern (2) ausgebildet ist, indem sie zumindest eine Vertiefung (11) zum Einlegen eines Objektträgers (2) umfasst;
• zum Transport mit einem Robotergreifer ausgebildet ist, indem sie je zwei im Wesentlichen parallel zu einander verlaufende Längswände (7) und Querwände (8) umfasst, welche je ein Aussenflächenprofil (5) mit zumindest je einer Angriffsfläche (4) zur Ineingriffnahme durch den Robotergreifer aufweisen;
• als Träger-Adapter für Mikroplattensysteme ausgebildet ist, indem das Aussenflächenprofil (5) der Längswände (7) und Querwände (8) im Wesentlichen mit dem Aussenflächenprofil einer Mikroplatte übereinstimmt,
**dadurch gekennzeichnet, dass** diese Haltevorrichtung (1) rahmenförmig gebaut ist, indem jede Vertiefung (11) eine, die Haltevorrichtung (1) vollständig durchdringende Öffnung und zumindest je ein Federelement (12) und einen Anschlag (13) umfasst, wobei dieses zumindest eine Federelement (12) eine Federkraft auf einen in die Vertiefung (11) eingelegten Objektträger (2) ausübt, durch welche dieser Objektträger (2) gegen den Anschlag (13) gedrückt wird.

2. Haltevorrichtung (1) nach Anspruch 1, **dadurch gekennzeichnet, dass** sie - zum Absetzen in einer Mikroplattenstation eines Probenanalyse- und/oder Probenbearbeitungs- und/oder Probenaufbewahrungs-Systems - ein Stapelflächenprofil (6) umfasst, welches im Wesentlichen mit dem Stapelflächenprofil einer Mikroplatte übereinstimmt.

3. Haltevorrichtung (1) nach einem der Ansprüche 1 oder 2, **dadurch gekennzeichnet, dass** sie zudem im Wesentlichen parallel zu den Querwänden (8) verlaufende Zwischenwände (9) umfasst.

4. Haltevorrichtung (1) nach einem der Ansprüche 1 bis 3, **dadurch gekennzeichnet, dass** die Längswände (7) und/oder Querwände (8) und/oder Zwischenwände (9) einen Absatz (10) aufweisen, auf den ein Objektträger (2) zumindest teilweise auflegbar ist.

5. Haltevorrichtung (1) nach einem der vorhergehenden Ansprüche, **dadurch gekennzeichnet, dass** das Federelement (12) zum Ausüben einer Federkraft auf diesen Objektträger (2) ausgebildet ist, welche in im wesentlichen paralleler Richtung zur Oberfläche (14) des Objektträgers gerichtet ist.

6. Haltevorrichtung (1) nach einem der Ansprüche 1 bis 4, **dadurch gekennzeichnet, dass** das Federelement (12) zum Ausüben einer Federkraft auf diesen Objektträger (2) ausgebildet ist, welche in im wesentlichen senkrechter Richtung zur Oberfläche (14) des Objektträgers gerichtet ist.

7. Haltevorrichtung (1) nach einem der vorhergehenden Ansprüche, **dadurch gekennzeichnet, dass** die Haltevorrichtung und das zumindest eine Federelement (12) aus dem gleichen Material hergestellt sind.

8. Haltevorrichtung (1) nach einem der vorhergehenden Ansprüche, **dadurch gekennzeichnet, dass** zumindest die Haltevorrichtung oder das zumindest eine Federelement (12) aus Kunststoff hergestellt sind.

9. Haltevorrichtung (1) nach einem der vorhergehenden Ansprüche, **dadurch gekennzeichnet, dass** zumindest die Haltevorrichtung oder das zumindest eine Federelement (12) aus Metall hergestellt sind.

10. Haltevorrichtung (1) nach einem der vorhergehenden Ansprüche, **dadurch gekennzeichnet, dass** das zumindest eine Federelement (12) einstückig mit der Haltevorrichtung hergestellt ist.

11. Haltevorrichtung (1) nach einem der vorhergehenden Ansprüche, **dadurch gekennzeichnet, dass** sle Grlfföffnungen (15) zum Ergreifen eines Objektträgers (2) umfasst.

12. Haltevorrichtung (1) nach einem der vorhergehenden Ansprüche, **dadurch gekennzeichnet, dass** sie als spritzgegossener oder in einem anderen Verfahren zum Herstellen grosser Stückzahlen hergestellter Mikroplatten-Adapter für Objektträger (2) ausgebildet ist.

13. Haltevorrichtung (1) nach einem der vorhergehenden Ansprüche, **dadurch gekennzeichnet, dass** sie zum sicheren Halten von vier nebeneinander, im wesentlichen parallel zueinander angeordneten Objektträgern (2) ausgebildet ist.

14. Verwendung einer Haltevorrichtung (1) nach einem der Ansprüche 1 bis 13 als Adapter zwischen Objektträgern und einem Mikroplattenhandling-Roboter.

15. Verwendung einer Haltevorrichtung (1) nach einem der Ansprüche 1 bis 13 als Adapter zwischen Objektträgern und einer Mikroplattenstation eines Proben-Analyse-, Proben-Bearbeitungs- oder Proben-Aufbewahrungs-Systems.

## Claims

1. A holding device (1)
- that is embodied to accept specimen carriers (2) in that it comprises at least one depression (11) to insert a specimen carrier (2);
- that is embodied for transportation by a robot gripper in that it comprises two lengthwise walls (7) and two crosswise walls (8) in each case running essentially parallel to one another, each of which walls exhibits an outer surface profile (5) with at least one surface (4) for application of the robot gripper;
- that is embodied as a carrier adapter for microplate systems in that the outer surface profile (5) of the lengthwise walls (7) and crosswise walls (8) essentially corresponds to the outer surface profile of a microplate,
**characterized in that** the holding device (1) is constructed in the form of a frame **in that** each depression (11) comprises an opening fully penetrating the holding device (1) and at least one spring element (12) and a stop (13), whereby the at least one spring element (12) exercises a spring force on a specimen carrier (2) inserted in the depression (11) as a result of which the specimen carrier (2) is pressed against the stop (13).

2. A holding device (1) according to claim 1, **characterized in that** - for setting down in a microplate station of a specimen analysis and/or specimen processing and/or specimen storage system - it comprises a stack surface profile (6) that essentially corresponds to the stack surface profile of a microplate.

3. A holding device (1) according to one of the claims 1 or 2, **characterized in that** it additionally comprises intermediate walls (9) running essentially parallel to the crosswise walls (8).

4. A holding device (1) according to one of the claims 1 through 3, **characterized in that** the lengthwise walls (7) and/or crosswise walls (8) and/or intermediate walls (9) exhibit a shelf (10) on which a specimen carrier (2) can at least partly be set down.

5. A holding device (1) according to one of the preceding claims, **characterized in that** the spring element (12) is embodied to exercise a spring force on the specimen carrier (2) that is directed in an essentially parallel direction to the surface (14) of the specimen carrier.

6. A holding device (1) according to one of the claims 1 through 4, **characterized in that** the spring element (12) is embodied to exercise a spring force on the specimen carrier (2) that is directed in an essentially perpendicular direction to the surface (14) of the specimen carrier.

7. A holding device (1) according to one of the preceding claims, **characterized in that** the holding device and the at least one spring element (12) are manufactured of the same material.

8. A holding device (1) according to one of the preceding claims, **characterized in that** at least the holding device or the at least one spring element (12) is manufactured of plastic.

9. A holding device (1) according to one of the preceding claims, **characterized in that** at least the holding device or the at least one spring element (12) is manufactured of metal.

10. A holding device (1) according to one of the preceding claims, **characterized in that** the at least one spring element (12) is manufactured in one piece with the holding device.

11. A holding device (1) according to one of the preceding claims, **characterized in that** it comprises grip openings (15) for gripping a specimen carrier (2).

12. A holding device (1) according to one of the preceding claims, **characterized in that** it is embodied by injection moulding or another method for manufacturing large numbers of microplate adapters for specimen carriers (2).

13. A holding device (1) according to one of the preceding claims, **characterized in that** it is embodied to securely hold four specimen carriers (2) arranged next to one another and essentially parallel to one another.

14. Use of a holding device (1) according to one of the claims 1 through 13 as an adapter between specimen carriers and a microplate handling robot.

15. Use of a holding device (1) according to one of the claims 1 through 13 as an adapter between specimen carriers and a microplate station of a specimen analysis, specimen processing or specimen storage system.

## Revendications

1. Dispositif de retenue (1)
- qui est conçu pour loger des porte-objets (2) en ce qu'il comporte au moins un creux (11) destiné à introduire un porte-objets (2),
- qui est conçu pour le transport par une pince robotisée, en ce qu'il comporte respectivement deux parois longitudinales (7) et deux parois transversales (8) s'étendant essentiellement parallèlement l'une à l'autre, qui présentent respectivement un profil de surface extérieur (5) comportant au moins respectivement une surface d'attaque (4) destinée à la prise par le pince robotisé,
- qui est conçu en tant qu'adaptateur de support pour systèmes de plaques de microtitration, en ce que le profil de surface extérieur (5) des parois longitudinales (7) et des parois transversales (8) coïncide essentiellement avec le profil de surface extérieur d'une plaque de microtitration,
**caractérisé en ce que** ce dispositif de retenue (1) est bâti en forme de cadre, **en ce que** chaque creux (11) comporte une ouverture traversant totalement le dispositif de retenue (1) et au moins respectivement un élément à ressort (12) et une butée (13), cet élément à ressort (12), au moins au nombre de un, exerçant un effet de ressort sur un porte-objets (2) introduit dans le creux (11), par le biais duquel ce porte-objets (2) est serré contre la butée (13).

2. Dispositif de retenue (1) selon la revendication 1, **caractérisé en ce qu'**il comprend - pour le dépôt dans une station de plaques de microtitration d'un système d'analyse d'échantillons et/ou de traitement d'échantillons et/ou de surveillance d'échantillons - un profil de surface étagé (6) qui coïncide essentiellement avec le profil de surface étagé d'une plaque de microtitration.

3. Dispositif de retenue (1) selon l'une des revendications 1 ou 2, **caractérisé en ce qu'**il comporte de plus des parois intermédiaires (9) s'étendant essentiellement parallèlement aux parois transversales (8).

4. Dispositif de retenue (1) selon l'une des revendications 1 à 3, **caractérisé en ce que** les parois longitudinales (7) et/ou les parois transversales (8) et/ou les parois intermédiaires (9) présentent un épaulement (10) sur lequel on peut au moins partiellement poser un porte-objets (2).

5. Dispositif de retenue (1) selon l'une des revendications précédentes, **caractérisé en ce que** l'élément à ressort (12) est conçu pour exercer un effet de ressort sur ce porte-objets (2) qui est orienté dans la direction essentiellement parallèle à la surface (14) du porte-objets.

6. Dispositif de retenue (1) selon l'une des revendications 1 à 4, **caractérisé en ce que** l'élément à ressort (12) est conçu pour exercer un effet de ressort sur ce porte-objets (2) qui est orienté dans la direction essentiellement perpendiculaire à la surface (14) du porte-objets.

7. Dispositif de retenue (1) selon l'une des revendications précédentes, **caractérisé en ce que** le dispositif de retenue et l'élément à ressort (12), au moins au nombre de un, sont fabriqués dans le même matériau.

8. Dispositif de retenue (1) selon l'une des revendications précédentes, **caractérisé en ce qu'**au moins le dispositif de retenue ou l'élément à ressort (12), au moins au nombre de un, est fabriqué dans un matériau plastique.

9. Dispositif de retenue (1) selon l'une des revendications précédentes, **caractérisé en ce qu'**au moins le dispositif de retenue ou l'élément à ressort (12), au moins au nombre de un, est fabriqué en métal.

10. Dispositif de retenue (1) selon l'une des revendications précédentes, **caractérisé en ce que** l'élément à ressort (12), au moins au nombre de un, est conçu d'une pièce avec le dispositif de retenue.

11. Dispositif de retenue (1) selon l'une des revendications précédentes, **caractérisé en ce qu'**il comporte des ouvertures de prise (15) destinées à saisir un porte-objets (2).

12. Dispositif de retenue (1) selon l'une des revendications précédentes, **caractérisé en ce qu'**il est conçu en tant qu'adaptateur de plaques de microtitration pour porte-objets (2) fabriqué par moulage par injection ou fabriqué selon un autre procédé destiné à fabriquer ces adaptateurs de plaques de microtitration en grandes quantités.

13. Dispositif de retenue (1) selon l'une des revendications précédentes, **caractérisé en ce qu'**il est conçu pour retenir de façon sûre quatre porte-objets (2) disposés les uns à côté des autres et essentiellement parallèles les uns aux autres.

14. Utilisation d'un dispositif de retenue (1) selon l'une des revendications 1 à 13 en tant qu'adaptateur entre des porte-objets et un robot de manipulation de plaques de microtitration.

15. Utilisation d'un dispositif de retenue (1) selon l'une des revendications 1 à 13 en tant qu'adaptateur entre des porte-objets et une station de plaques de microtitration d'un système d'analyse d'échantillons, de traitement d'échantillons ou de surveillance d'échantillons.
